# EUROPEAN PATENT SPECIFICATION

(11) **EP 3 095 744 B1**
(45) Date of publication and mention of the grant of the patent: **16.09.2020**
(21) Application number: 16170726.0
(22) Date of filing: 20.05.2016
(51) Int. Cl.: B66B 11/04

(54) **ELEVATOR MACHINE WITH OIL-LUBRICATED BEARINGS**
AUFZUGSMASCHINE MIT ÖLGESCHMIERTEN LAGERN
MACHINE D'ASCENSEUR AVEC DES ROULEMENTS LUBRIFIÉS À L'HUILE

(30) Priority: 21.05.2015 US 201562165146 P
(43) Date of publication of application: 23.11.2016
(73) Proprietor: Otis Elevator Company, Farmington CT 06032 (US)
(72) Inventor: STRBUNCELJ, Zlatko, Farmington, CT Connecticut 06032 (US)
(74) Representative: Dehns

(56) References cited:
- EP-A1- 1 486 450
- EP-A1- 1 630 120
- WO-A1-2014/193728
- JP-A- 2013 018 630
- US-A1- 2012 267 199

## Description

### BACKGROUND

The disclosure relates to elevator machines. More particularly, the disclosure relates to elevator machine bearings.

The sheave and/or motor of the machine may be supported for rotation by one or more bearing systems. International Application Publications WO2014/193726 and WO2014/193728 disclose a recent proposal for an oiled system. Other earlier systems have commonly used greased bearings. Oil bearings may have certain performance advantages as well as certain advantages of serviceability. For example, the WO '728 application discloses relatively easy oil drain and refill removing only drain and refill plugs. By way of contrast, a greased bearing cannot simply be drained. A partial disassembly may be required to remove contaminated grease.

However, greased bearings have advantages of cleanliness. The flowability of oil makes it much more likely to leak than grease. Leaked oil can contaminate critical surfaces such as the brake disks and associated paths.

US 2012/0267199 describes an elevator machine having a motor, a sheave and a bearing system supporting the sheave for rotation about an axis. The bearing member is sized so as to provide lubricant spaces between the bearing member and side walls of an outer housing.

### SUMMARY

One aspect of the disclosure involves an elevator machine comprising a motor, a sheave, and a bearing system supporting the sheave for rotation about an axis. The bearing system comprises: an inner sleeve; an inner race mounted to the inner sleeve; a housing; an outer race mounted to the housing; one or more circumferential arrays of rolling elements between the inner race and the outer race; and a shield. The shield comprises a hub secured to the sleeve and a radially outwardly open channel at least along a portion of the shield.

In one or more embodiments of any of the other embodiments, the radially outwardly open channel is one of a plurality of radially interdigitated: one or more radially outwardly open channels of the shield; and one or more radially radially outwardly open channels of the housing.

In one or more embodiments of any of the other embodiments, one or both of: the one or more radially outwardly open channels of the shield are at least two channels; and the one or more radially radially outwardly open channels of the housing are at least two channels.

In one or more embodiments of any of the other embodiments, the shield has an outer flange and said radially outwardly open channel. The channel has: an inner sidewall surface formed by the flange; a base surface formed by an annular barrier; and an outer sidewall surface formed by a radially outwardly projecting lip.

In one or more embodiments of any of the other embodiments, the radially outwardly open channel is a first radially outwardly open channel and the housing has a second radially outwardly open channel, radially inboard of the first radially outwardly open channel.

In one or more embodiments of any of the other embodiments, the shield has a third radially outwardly open channel, radially inboard of the second radially outwardly open channel.

In one or more embodiments of any of the other embodiments, the housing has: a fourth radially outwardly open channel, radially inboard of the third radially outwardly open channel. A potential leakage path passes sequentially: radially inward between the shield outer flange and housing; axially outward past an outer rim of the first radially outwardly open channel; radially inward; axially inward past an inner rim of the second radially outwardly open channel; radially inward; axially outward past an outer rim of the third radially outwardly open channel; radially inward; and axially inward past an inner rim of the fourth radially outwardly open channel.

In one or more embodiments of any of the other embodiments, the radially outwardly open channel is a first radially outwardly open channel and the shield has a second radially outwardly open channel, radially inboard of the first radially outwardly open channel.

In one or more embodiments of any of the other embodiments, a potential leakage path passes sequentially: axially outward past an outer rim of the first radially outwardly open channel; radially inward; and past a seal.

In one or more embodiments of any of the other embodiments, the seal is a labyrinth seal or a lip seal.

In one or more embodiments of any of the other embodiments, the motor has a fixed inner stator and an outer rotor; and the sheave is mounted to the outer rotor.

In one or more embodiments of any of the other embodiments, the inner sleeve is fixed to the shaft against relative rotation about the axis; and the housing is mounted to the sheave to support the sheave and rotate therewith about the axis as a unit.

In one or more embodiments of any of the other embodiments, the housing is mounted to the sheave via a brake disk hub.

In one or more embodiments of any of the other embodiments, the bearing system is a first bearing system and the elevator machine further comprises: a second bearing system supporting the sheave for rotation about the axis. The second bearing system comprises: an inner sleeve; an inner race mounted to the inner sleeve a housing; an outer race mounted to the housing; one or more circumferential arrays of rolling elements between the inner race and the outer race; and a shield comprising: a hub secured to the sleeve; and a radially outwardly open channel at least along a portion of the shield.

In one or more embodiments of any of the other embodiments, the housing comprises a main housing and a cover mounted across an axially outboard opening of the main housing. The main housing has a web extending radially outward from adjacent an inboard end of the sleeve and a sidewall extending axially outward from the web and surrounding the bearing outer race.

In one or more embodiments of any of the other embodiments, the main housing comprises a mounting flange extending radially outward from the sidewall and unitarily formed with the sidewall and web.

In one or more embodiments of any of the other embodiments, the cover comprises: a body mounted to the main housing (the body having: a central opening passing the shaft; and a circumferential array of apertures radially outboard of the central opening) and a transparent window mounted across the circumferential array of apertures.

In one or more embodiments of any of the other embodiments, an elevator system includes the elevator machine and further comprises: an elevator car; and a rope or belt suspending the car from the elevator machine.

Another aspect of the disclosure involves a method according to claim 13.

In one or more embodiments of any of the other embodiments of the method, the elevator machine may be as described above or in further detail below.

In one or more embodiments of any of the other embodiments, the oil flowing circumferentially in the channel eventually reaches an accumulation in a lower portion of an interior of the housing.

The details of one or more embodiments are set forth in the accompanying drawings and the description below.

### BRIEF DESCRIPTION OF THE DRAWINGS

FIG. 1 is a schematic view of an elevator system.
FIG. 2 is a view of an elevator machine of the system of FIG. 1.
FIG. 3 is a central vertical longitudinal sectional view through the machine of FIG. 2.
FIG. 4 is a first view of a cartridge of the machine of FIG. 3.

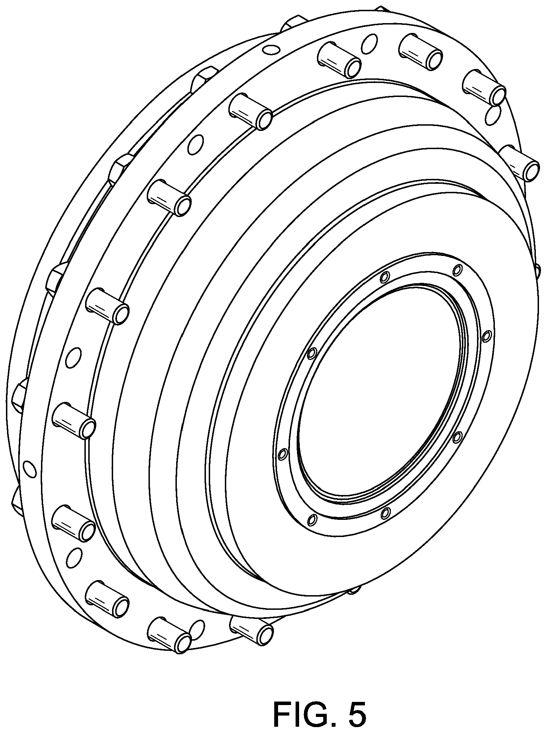

FIG. 5 is a second view of the cartridge of FIG. 3.
FIG. 6 is a central vertical sectional view through the cartridge in a first condition.
FIG. 6A is an enlarged view of an upper portion of the cartridge of FIG. 6.
FIG. 7 is a second vertical sectional view of the cartridge in a second condition.
FIG. 7A is an enlarged view of an upper portion of the cartridge of FIG. 7.
FIG. 8 is a view of a housing cover of the cartridge.

Like reference numbers and designations in the various drawings indicate like elements.

### DETAILED DESCRIPTION

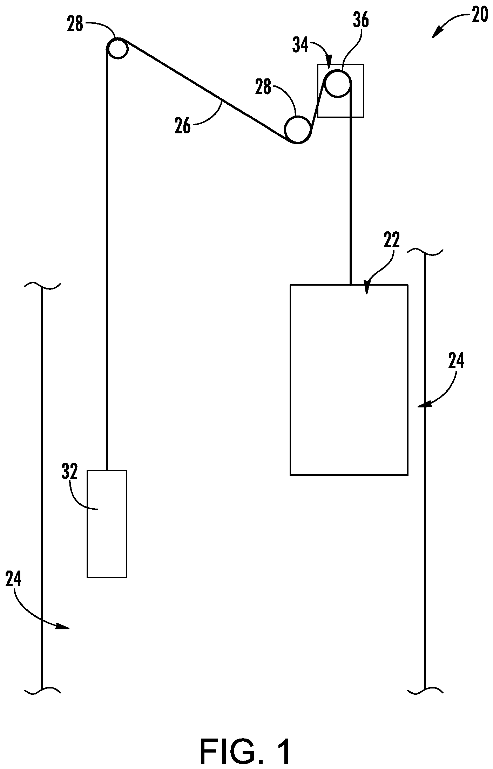

FIG. 1 shows a schematic of an exemplary traction elevator system 20. Features of the elevator system 20 that are not required for an understanding of the present invention (such as the guide rails, safeties, etc.) are not discussed herein. The elevator system 20 includes an elevator car 22 operatively suspended in a hoistway 24 with one or suspension members 26, such as ropes or belts. The one or more suspension members 26 (belts, ropes (cables), or the like) interact with one or more sheaves 28, 36 to be routed around various components of the elevator system 20. The one or more suspension members 26 could also be connected to a counterweight 32, which is used to help balance the elevator system 20 during operation.

The sheaves each have a diameter, which may be the same or different than the diameters of the other sheaves in the elevator system 20. At least one of the sheaves could be a traction sheave 36 and driven by an elevator machine (machine) 34. In the exemplary embodiment, the traction sheave 36 is integrated with the elevator machine 34 as a portion thereof. Movement of the traction sheave 36 by the machine 34 drives (through traction) the one or more suspension members 26 that are routed around the traction sheave 36.

At least one of the sheaves 28 could be a diverter, deflector or idler sheave. Diverter, deflector or idler sheaves are not driven by the machine 34, but help guide the one or more suspension members 26 around the various components of the elevator system 20. The shape of the sheave 28 depends on the shape of the suspension member 26 that it engages.

In some embodiments, the elevator system 20 could use two or more suspension members 26 for suspending and/or driving the elevator car 22. In addition, the elevator system 20 could have various configurations such that either both sides of the one or more suspension members 26 engage the one or more sheaves (or only one side of the one or more suspension members 26 engages the one or more sheaves.

FIG 1 provides a 1:1 roping arrangement in which the one or more suspension members 26 terminate at the car 22 and counterweight 32.

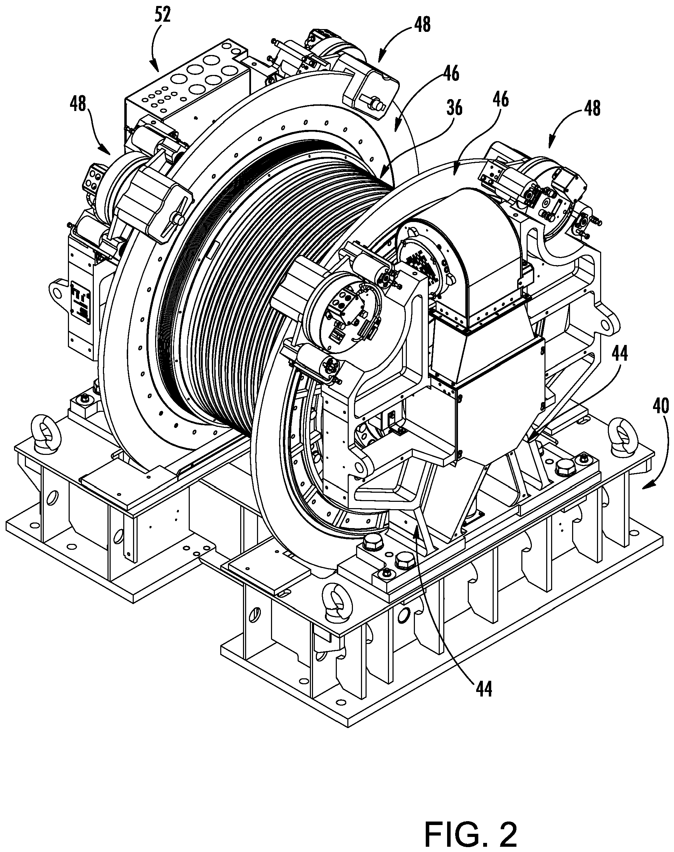

The machine 34 may include a bedplate 40 (FIG. 2). The bedplate 40 may serve as a base or support for the machine 34. The bedplate 40 may support the machine 34 when the machine 34 is installed in the elevator system.

The machine 34 may include one or more stands or supports, such as stands 44. The stands 44 may be used to provide support for the machine 34 and may be used to provide sufficient clearance with respect to the operative components of the machine 34.

The machine 34 may include a brake system. The exemplary brake system is a disk brake system. The exemplary disk brake system includes a pair of brake disks 46. Each disk is associated with one or more brake calipers 48. The brake calipers 48 each may be selectively engaged to the associated brake disk 46, which engagement may be used to bring the elevator car to a controlled stop.

The machine 34 may include the sheave 36. The sheave 36 may be used to hold or support a rope, a cable, a belt, etc., for purposes of facilitating movement of the elevator car within the elevator system.

The machine 34 may include one or more terminal boxes 52. A terminal box 52 may be arranged on a stationary frame on a side of the sheave 36 and may be used to provide for one or more points of connection (e.g., electrical connection for powering the motor (described below)).

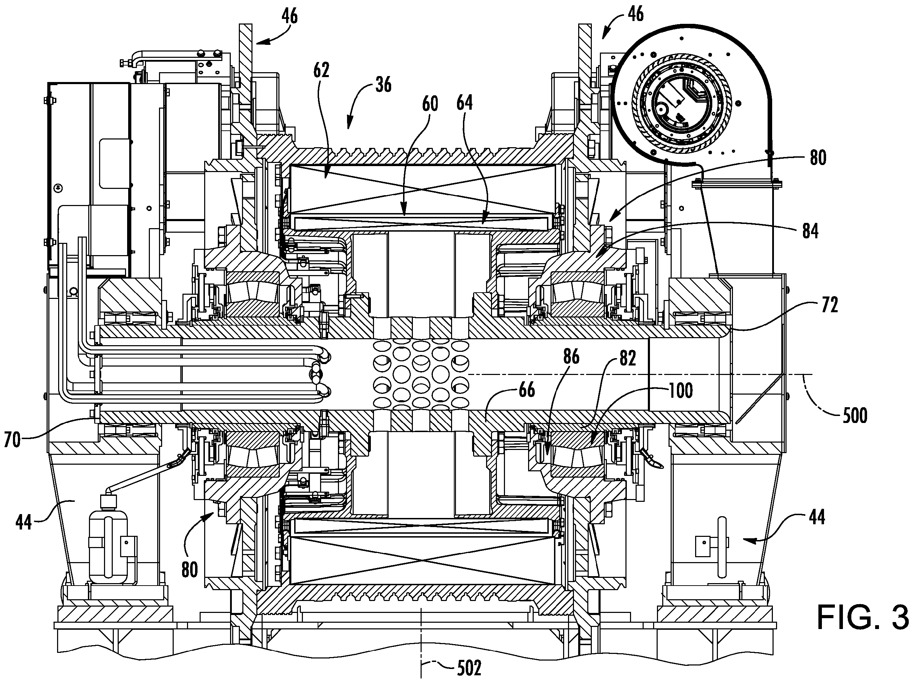

FIG. 3 is a cross-section of the machine 34. The machine 34 may have a motor 60, which is illustratively shown in FIG. 3 comprising an outer rotor 62 and an inner stator 64. The rotor 62 may be coupled to the sheave 36 to deliver mechanical power to drive or move the elevator car. As described further below, the stator 64 may be coupled to (e.g., fixedly mounted on) a stationary shaft 66. FIG. 3 shows a central longitudinal axis 500 of the shaft 66. This also forms a central longitudinal axis of the motor stator 64. Subject to vibrational tolerances, manufacturing tolerances, deformation tolerances, and wear, the axis 500 also forms the central longitudinal axis of the motor rotor, sheave, brake disks, bearing systems, and the like. The exemplary supports 44 hold the shaft against all movement and rotation relative to the bed plate (subject to any vibration damping/isolation features which might be present).

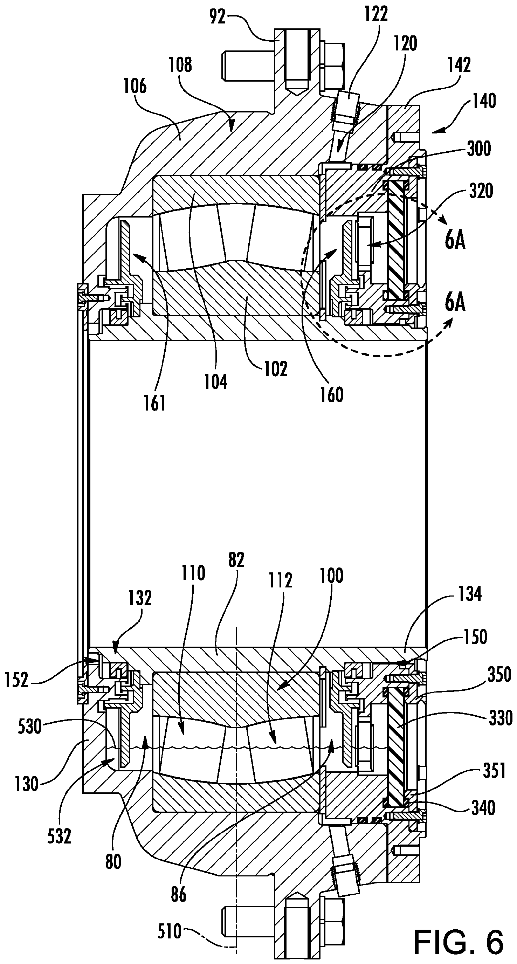

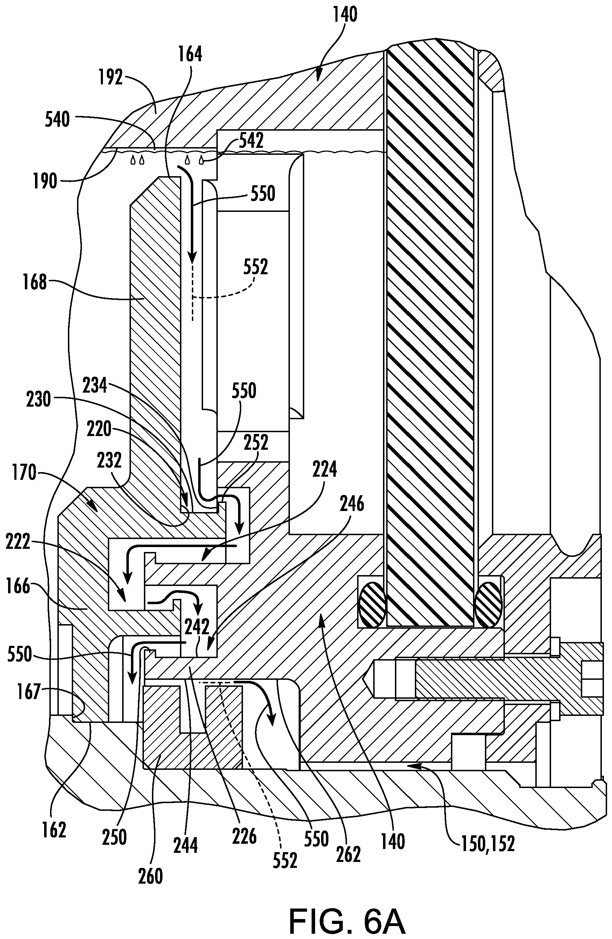

The shaft extends from a first end 70 to a second end 72. The first end 70 is mounted to a first end support 44 and the second end is mounted to a second end support 44. The shaft supports the sheave 36 and rotor 62 via a pair of bearing cartridges 80. The exemplary cartridges each have an inner sleeve 82 mounted to the shaft and an outer housing 84 mounting the brake disk. The inner sleeve and outer housing cooperate to define a compartment or cartridge interior 86. The sheave 36 may be mounted at its respective ends to the respective brake disks 46 to be supported via the cartridges. Similarly, the motor rotor may be mounted to the sheave. The "inner" nature of the sleeve 82 and "outer" nature of the housing 84 is radially inner and radially outer relative to the axis 500. Depending upon context, the terms "inner" and "outer" may also refer to axial directions. When referring to axial directions, this may be relative to the machine as a whole (e.g., with inner being towards a transverse centerplane 502 and "outer" away therefrom or may be relative to a transverse centerplane or other reference of the component or subsystem involved. Thus, each of the bearing cartridges has a transverse centerplane 510 (FIG. 6) centrally through its associated bearing 100. The two axially outward directions from that centerplane 510, respectively, comprise the axially outward direction and axially inward direction relative to the machine transverse centerplane 502.

Accordingly, it is seen that in the exemplary embodiment, each of the bearing cartridges may be identical and may face in opposite directions. As is discussed further below, within each cartridge there are also features which may be identical and face in opposite directions relative to the cartridge transverse centerplane 510.

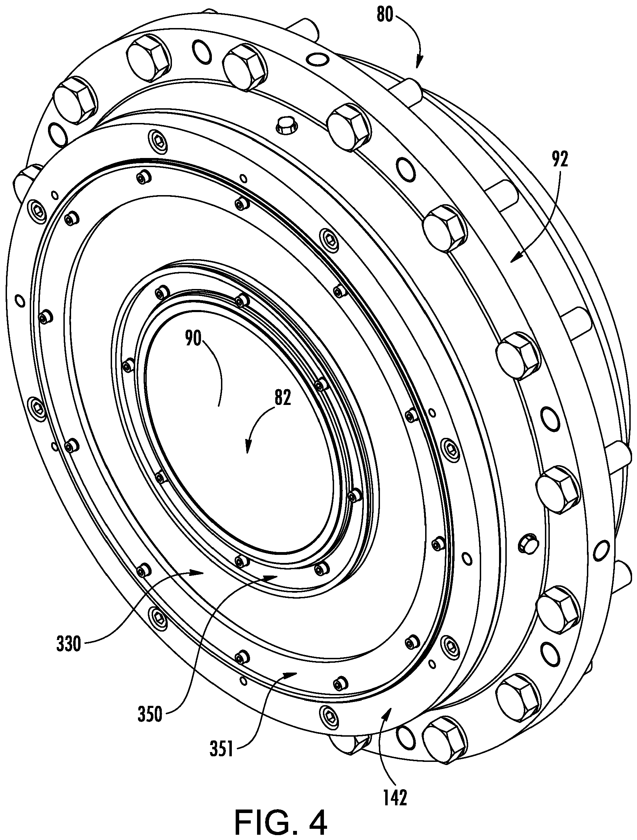

FIG. 4 shows the inner sleeve 82 as having an inner diameter (ID) surface 90 for receiving and engaging the shaft 66. FIG. 4 further shows the outer housing 84 as comprising an outer diameter (OD) flange 92 for bolting to an adjacent hub portion of the adjacent disk 46.

FIG. 6 shows further details of bearings 100. Each bearing comprises an inner diameter (ID) race 102 mounted to an outer diameter (OD) surface of the sleeve and an outer diameter (OD) race 104 mounted within a ring portion 106 of a main member 108 of the housing 84. One or more circumferential arrays of rolling elements are accommodated between the races. In this example, as rolling elements, there are two arrays of rollers 110 and 112 so as to provide both thrust and radial retention.

When the elevator is not moving, oil will tend to accumulate in the bottom of the compartment within the cartridge. For purposes of illustration, FIG. 6 shows a surface 530 of an oil accumulation 532 in the bottom of the compartment. A significant such accumulation may be observed when the elevator is not moving. When the elevator is moving, the oil will be circumferentially flung outward toward the outer diameter (OD) of the compartment 86 and will also be propelled circumferentially by surface tension of oil on the rotating housing 84. Oil that has reached upper portions of the compartment may tend to fall back downward. This action creates increased possibility of leakage.

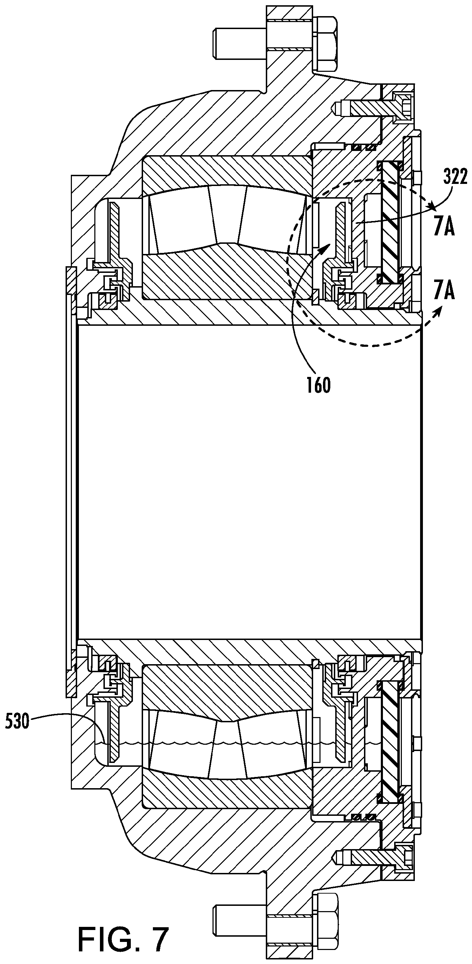

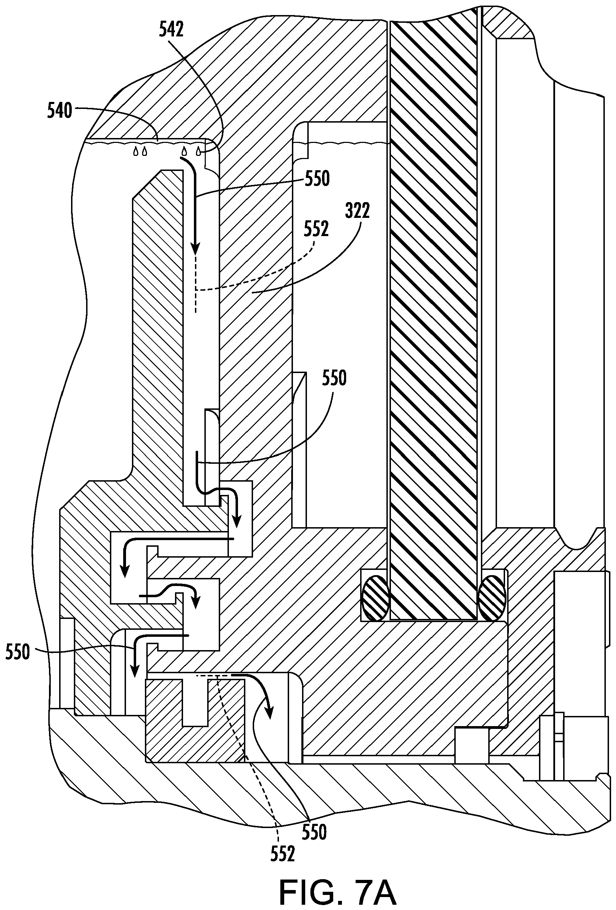

FIG. 6A shows oil 540 along an upper portion of the housing while the elevator is moving. It is noted that, because the housing rotates, this is an instantaneous view. At this instant, the vertical cut plane intersects one of several oil fill/drain ports 120 (FIG. 6) circumferentially arrayed around the bearing. An exemplary number of ports is four ports at 90° angles about the axis 500. The ports are sealed with a removable plug 122 for draining and reintroducing oil. Thus, if the machine is stopped at any given instance, one port may be fairly close to the bottom of the cartridge to allow draining and another port may be fairly high on the cartridge to allow filling. FIG. 7 shows a vertical cut plane at a different interval wherein the ports 120 do not intersect the cut plane.

FIG. 6 shows the cartridge housing main member 108 as having an inboard (relative to plane 510) end flange 130 extending radially inward to close proximity with an adjacent axially inboard end portion 132 of the sleeve 82. The outboard end of the housing main member has an opening closed by a cover 140. The cover 140 may be secured in place. For example, a radially outboard flange 142 of the cover may be screwed to the axially outboard rim of the housing main member. An inner diameter (ID) portion of the cover may be in close facing proximity to an axially outboard end portion 134 of the sleeve.

To prevent oil leakage, a baffle-like shield 160 is provided. As is discussed further below, two similar shields 160, 161 are provided opposite each other facing away from the cartridge transverse centerplane 510 (one near the inboard end of the bearing (relative to the machine transverse centerplane 502) and the other near the outboard end). The exemplary shield 160, 161 are nearly identical, having very similar gross features but slightly different proportions in view of the housing features they interface with. The shield tends to capture any oil that may fall downward from the upper portion of the housing and redirect that flow circumferentially to the lower portion below the gap 150, 152 between the sleeve 82 and the housing flange 130 or the cover 140. In the exemplary embodiment, two such shields are provided in the cartridge on opposite sides of the bearing. The exemplary shields are identical facing opposite each other. Alternative embodiments may have different forms of shield. Each exemplary shield is formed essentially as a body of revolution about the axis 500. The shields each extend from a radially inboard end 162 (FIG. 6A) to a radially outboard end 164. The inboard end 162 defines a central aperture receiving a complementary portion of the sleeve (e.g., in a shrink fit relation).

A hub portion 166 of the shield extends radially outward from the inboard end or rim 162. A surface of the hub 166 facing into the bearing cartridge may abut a shoulder 167 of the sleeve in the shrink fit relation.

The sleeve includes an outer flange portion 168 extending radially outward to the rim 164. The exemplary flange portion 168 is stepped axially outward (relative to the centerplane of the bearing) by a step 170 in the cross-section of the shield.

The shield 160 at the outboard end of the bearing cartridge is received within a portion of the cover 140. The shield 161 at the inboard end of the cartridge is received within a base portion of the housing main member adjacent the flange 130. The shield has a variety of features that interfit with features of the respective cover 140 or flange 130 (the inboard surface of the flange) to help redirect potential oil leakage flows back to a base area within the housing and prevent their leakage between the housing and sleeve. These interfitting features comprise a series of nested radially outwardly open channels 220, 222, 224, 226 on the shield and respective cover 140 or flange 130. As is discussed above, the exemplary shields have essentially the same combination of channels but with slightly different axial protrusions of the channels based upon the housing features the channels must interface with. Such asymmetries between the two shields may result from modifying a baseline cartridge without the shields, thus necessitating asymmetries to accommodate baseline differences. In alternative implementations, identical shields could be used.

FIG. 6A shows a film 540 of oil along the inboard or inner diameter (ID) surface 190 of an adjacent portion 192 of the cover 140. Oil droplets 542 may be flung or dropped from the accumulation 540 forming a flow 550 passing radially inward and generally downward along a potential leakage flowpath 552. Along the upper portion of the bearing, falling oil of the flow 550 will tend to land in a channel and then pass circumferentially downward along the outboard surface 242 of a base or barrier 240. In this example, the first channel encountered will be the channel 220 of the shield. Alternative examples may have an outboardmost channel being a channel of the housing. However, some oil may bypass the channel (e.g., passing over a sidewall 250 rim 252 of the channel). In that case, the oil may collect in the next radially inward nested channel and so on. In the example, the next channel is a channel of the other of the two members (shield and cover or flange). In the illustrated radial section, the flow 550 and flowpath 552 are thus subject to the circumferential diversions so that the volume of flow 550 along the flowpath as seen in upper portion progressively decreases and may reach nearly zero. For example, passing over just two channels may account for almost all the oil.

As an exemplary final backup, a seal 260 (e.g., a labyrinth seal or an elastomeric lip) may seal between the sleeve and the cover (e.g., as shown with an inner diameter (ID) surface mounted to the sleeve and lips in sealing engagement with a radially inwardly facing surface 262 of the cover). Although the flow 550 and flowpath 552 are shown bypassing the seal, as a practical matter, no flow/bypass would be expected at that point. The illustrated nesting or radial has each channel partially axially overlapping with the next channel radially outboard or inboard thereof. The exemplary nesting has two channels 220, 222 on each of the shields radially interdigitated with two channels 224, 226 on each of the associated cover 140 and flange 130 (e.g., alternating). Thus, the base or barrier 240 outboard surface forms a base surface 230 of the channel, a first sidewall surface of the channel 232 is formed by the respective member on which the channel is formed, and the second sidewall surface 234 of the channel is formed by a side surface of the associated lip 250. The axially inner versus outer nature of the first and second surfaces will depend on whether the channel is on the shield or the other member. Oil hitting the channels of the cover or flange may, however, tend to be flung centrifugally outward. However, there is then a tendency of that oil to hit the underside (inboard surface) 244 of the next radially outboard channel of the shield and potentially flow circumferentially downward.

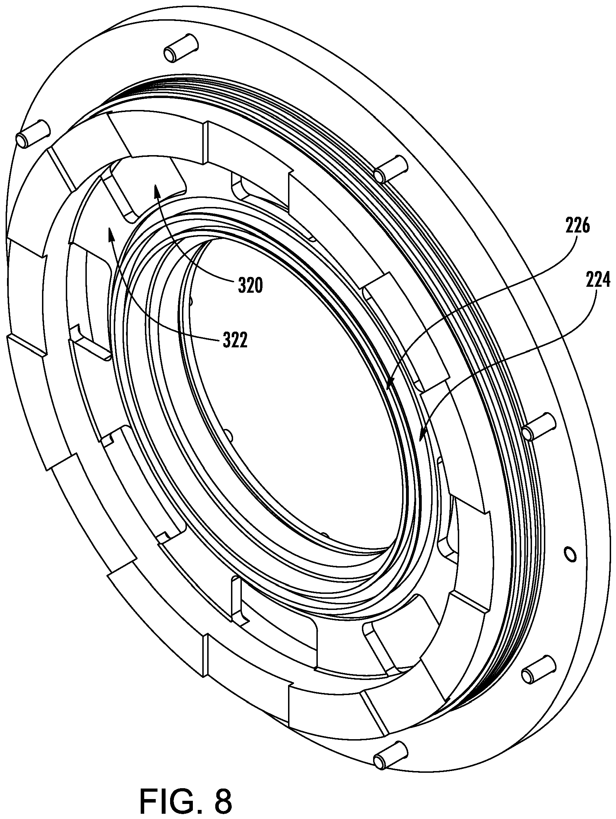

The exemplary cover 140 may itself be an assembly of multiple pieces. An exemplary main body 300 includes the cover portions discussed above. The exemplary member 300 (e.g., a metallic machining) may include a plurality of viewing ports 320 (FIGS. 6 and 8). These may be separated by radial web segments 322 (FIGS. 7 and 8). The cover 240 may further include a transparent viewing plate 330 (e.g., a transparent plastic or glass annulus) mounted in place. For example, it may be located in an annular recess sealed by appropriate seals 340 and secured in place by a retaining rings 350, 352 plate (e.g., or an annular plate having apertures aligned with the ports 320 and webs aligned with the webs 322) fastened to the member 300. The viewing plate 330 thus allows viewing of the oil level to verify oil level and condition.

The elevator machine may be made using otherwise conventional or yet-developed materials and techniques.

The use of "first", "second", and the like in the description and following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

One or more embodiments have been described. Nevertheless, it will be understood that various modifications may be made. For example, when applied to an existing basic system, details of such configuration or its associated use may influence details of particular implementations. Accordingly, other embodiments are within the scope of the appended claims.

## Claims

1. An elevator machine (34) comprising:
a motor (60);
a sheave (36);
a bearing system supporting the sheave for rotation about an axis (500) and comprising:
an inner sleeve (82);
an inner race (102) mounted to the inner sleeve;
a housing (84);
an outer race (104) mounted to the housing;
one or more circumferential arrays of rolling elements (110, 112) between the inner race and the outer race; **characterized by** the bearing system further comprising
a shield (160; 161) comprising:
a hub (166) secured to the sleeve; and
a radially outwardly open channel (220, 222) at least along a portion of the shield.

2. The elevator machine of claim 1 wherein the radially outwardly open channel is one of a plurality of radially interdigitated:
one or more radially outwardly open channels (220, 222) of the shield; and
one or more radially radially outwardly open channels (224, 226) of the housing.

3. The elevator machine of any previous claim wherein one or both of:
the one or more radially outwardly open channels of the shield are at least two channels; and
the one or more radially radially outwardly open channels of the housing are at least two channels.

4. The elevator machine of any previous claim wherein the shield has:
an outer flange (168); and
said radially outwardly open channel (220) having:
an inner sidewall surface (232) formed by the flange;
a base surface (230) formed by an annular barrier; and
an outer sidewall surface (234) formed by a radially outwardly projecting lip (250).

5. The elevator machine of any previous claim wherein the radially outwardly open channel (220) is a first radially outwardly open channel and the housing has:
a second radially outwardly open channel (224), radially inboard of the first radially outwardly open channel,
and optionally wherein the shield has:
a third radially outwardly open channel (222), radially inboard of the second radially outwardly open channel.

6. The elevator machine of claim 5 wherein the housing has:
a fourth radially outwardly open channel (246), radially inboard of the third radially outwardly open channel so that a potential leakage path (552) passes sequentially:
radially inward between the shield outer flange and housing;
axially outward past an outer rim of the first radially outwardly open channel;
radially inward;
axially inward past an inner rim of the second radially outwardly open channel;
radially inward;
axially outward past an outer rim of the third radially outwardly open channel;
radially inward; and
axially inward past an inner rim of the fourth radially outwardly open channel.

7. The elevator machine of any previous claim wherein the radially outwardly open channel (220) is a first radially outwardly open channel and the shield has:
a second radially outwardly open channel (222), radially inboard of the first radially outwardly open channel.

8. The elevator machine of any previous claim wherein:
a potential leakage path (552) passes sequentially:
axially outward past an outer rim of the first radially outwardly open channel;
radially inward; and
past a seal (260),
and wherein preferably
the seal (260) is a labyrinth seal or a lip seal.

9. The elevator machine of any previous claim wherein:
the motor has a fixed inner stator (64) and an outer rotor (62); and
the sheave is mounted to the outer rotor;
and/or wherein:
the inner sleeve is fixed to the shaft against relative rotation about the axis; and
the housing is mounted to the sheave to support the sheave and rotate therewith about the axis as a unit;
and/or wherein:
the housing is mounted to the sheave via a brake disk hub.

10. The elevator machine of any previous claim wherein the bearing system is a first bearing system and the elevator machine further comprises:
a second bearing system supporting the sheave for rotation about the axis (500) and comprising:
an inner sleeve;
an inner race mounted to the inner sleeve
a housing;
an outer race mounted to the housing;
one or more circumferential arrays of rolling elements between the inner race and the outer race; and
a shield comprising:
a hub secured to the sleeve; and
a radially outwardly open channel at least along a portion of the shield.

11. The elevator machine of any previous claim wherein the housing comprises:
a main housing (108) having:
a web (130) extending radially outward from adjacent an inboard end of the sleeve; and
a sidewall (106) extending axially outward from the web and surrounding the bearing outer race; and
a cover (140) mounted across an axially outboard opening of the main housing, and wherein optionally the main housing comprises:
a mounting flange (92) extending radially outward from the sidewall and unitarily formed with the sidewall and web,
and wherein the cover preferably comprises:
a body (300) mounted to the main housing and having:
a central opening passing the shaft; and
a circumferential array of apertures (320) radially outboard of the central opening; and
a transparent window (330) mounted across the circumferential array of apertures.

12. An elevator system including the elevator machine of any previous claim and further comprising:
an elevator car (22); and
a rope or belt (26) suspending the car from the elevator machine.

13. A method for using an elevator machine according to any of claims 1 to 11, the method comprising:
running the motor (60) to drive rotation of the sheave (36) and the bearing housing (84);
the rotation of the bearing housing and/or rolling of bearings (110, 112) centrifugally distributing oil within the bearing housing; **characterized by**
capturing falling oil in the radially outwardly open channel (220, 222, 224, 226) and then allowing flow of the oil circumferentially in the channel.

14. The method of claim 13 further comprising:
the oil flowing circumferentially in the channel eventually reaching an accumulation (532) in a lower portion of an interior of the bearing housing.

## Patentansprüche

1. Aufzugsmaschine (34), Folgendes umfassend:
einen Motor (60);
eine Seilscheibe (36);
ein Lagersystem, das die Seilscheibe zur Drehung um eine Achse (500) stützt und Folgendes umfasst:
eine innere Hülle (82);
einen inneren Laufring (102), der an der inneren Hülle montiert ist;
ein Gehäuse (84);
einen äußeren Laufring (104), der an dem Gehäuse montiert ist;
eine oder mehrere Umfangsanordnungen von Rollelementen (110, 112) zwischen dem inneren Laufring und dem äußeren Laufring; **dadurch gekennzeichnet, dass** das Lagersystem ferner Folgendes umfasst:
eine Abschirmung (160; 161), Folgendes umfassend:
eine Nabe (166), die an der Hülle gesichert ist; und
einen radial nach außen offenen Kanal (220, 222) mindestens entlang eines Abschnittes der Abschirmung.

2. Aufzugsmaschine nach Anspruch 1, wobei der radial nach außen offene Kanal einer aus einer Vielzahl der folgenden radial ineinandergreifenden Kanäle ist:
einem oder mehreren radial nach außen offenen Kanälen (220, 222) der Abschirmung; und
einem oder mehreren radial radial nach außen offenen Kanälen (224, 226) des Gehäuses.

3. Aufzugsmaschine nach einem der vorhergehenden Ansprüche, wobei eines oder beide der Folgenden gelten:
der eine oder die mehreren radial nach außen offenen Kanäle der Abschirmung sind mindestens zwei Kanäle;
und
der eine oder die mehreren radial radial nach außen offenen Kanäle des Gehäuses sind mindestens zwei Kanäle.

4. Aufzugsmaschine nach einem der vorhergehenden Ansprüche, wobei die Abschirmung Folgendes aufweist:
einen Außenflansch (168); und
den radial nach außen offenen Kanal (220) mit:
einer inneren Seitenwandfläche (232), die von dem Flansch gebildet wird;
einer Grundfläche (230), die durch eine ringförmige Barriere gebildet wird; und
einer äußeren Seitenwandfläche (234), die von einer radial nach außen hervorstehenden Lippe (250) gebildet wird.

5. Aufzugsmaschine nach einem der vorhergehenden Ansprüche, wobei der radial nach außen offene Kanal (220) ein erster radial nach außen offener Kanal ist und das Gehäuse Folgendes aufweist:
einen zweiten radial nach außen offenen Kanal (224), radial einwärts des ersten radial nach außen offenen Kanals,
und wobei die Abschirmung optional Folgendes aufweist:
einen dritten radial nach außen offenen Kanal (222), radial einwärts des zweiten radial nach außen offenen Kanals.

6. Aufzugsmaschine nach Anspruch 5, wobei das Gehäuse Folgendes aufweist:
einen vierten radial nach außen offenen Kanal (246), radial einwärts des dritten radial nach außen offenen Kanals, sodass ein potenzieller Austrittsweg (552) wie folgt nacheinander verläuft:
radial einwärts zwischen dem Außenflansch der Abschirmung und dem Gehäuse;
axial auswärts an einem Außenrand des ersten radial nach außen offenen Kanals vorbei;
radial einwärts;
axial einwärts an einem Innenrand des zweiten radial nach außen offenen Kanals vorbei;
radial einwärts;
axial auswärts an einem Außenrand des dritten radial nach außen offenen Kanals vorbei;
radial einwärts; und
axial einwärts an einem Innenrand des vierten radial nach außen offenen Kanals vorbei.

7. Aufzugsmaschine nach einem der vorhergehenden Ansprüche, wobei der radial nach außen offene Kanal (220) ein erster radial nach außen offener Kanal ist und die Abschirmung Folgendes aufweist:
einen zweiten radial nach außen offenen Kanal (222), radial einwärts des ersten radial nach außen offenen Kanals.

8. Aufzugsmaschine nach einem der vorhergehenden Ansprüche, wobei:
ein potenzieller Austrittsweg (552) wie folgt nacheinander verläuft:
axial auswärts an einem Außenrand des ersten radial nach außen offenen Kanals vorbei;
radial einwärts; und
an einer Dichtung (260) vorbei,
und wobei vorzugsweise
die Dichtung (260) eine Labyrinthdichtung oder eine Lippendichtung ist.

9. Aufzugsmaschine nach einem der vorhergehenden Ansprüche, wobei:
der Motor einen festen inneren Stator (64) und einen Außenrotor (62) aufweist; und
die Seilscheibe an dem Außenrotor montiert ist;
und/oder wobei:
die innere Hülle an der Welle gegen eine relative Drehung um die Achse befestigt ist; und
das Gehäuse an der Seilscheibe montiert ist, um die Seilscheibe zu stützen und sich damit als eine Einheit um die Achse zu drehen;
und/oder wobei:
das Gehäuse mittels einer Bremsscheibennabe an der Seilscheibe montiert ist.

10. Aufzugsmaschine nach einem der vorhergehenden Ansprüche, wobei das Lagersystem ein erstes Lagersystem ist und die Aufzugsmaschine ferner Folgendes umfasst:
ein zweites Lagersystem, das die Seilscheibe zur Drehung um die Achse (500) stützt und Folgendes umfasst:
eine innere Hülle;
einen inneren Laufring, der an der inneren Hülle montiert ist;
ein Gehäuse;
einen äußeren Laufring, der an dem Gehäuse montiert ist;
eine oder mehrere Umfangsanordnungen von Rollelementen zwischen dem inneren Laufring und dem äußeren Laufring; und
eine Abschirmung, Folgendes umfassend:
eine Nabe, die an der Hülle gesichert ist; und
einen radial nach außen offenen Kanal mindestens entlang eines Abschnittes der Abschirmung.

11. Aufzugsmaschine nach einem der vorhergehenden Ansprüche, wobei das Gehäuse Folgendes umfasst:
ein Hauptgehäuse (108) mit:
einem Steg (130), der sich von neben einem einwärtigen Ende der Hülle aus radial nach außen erstreckt; und
einer Seitenwand (106), die sich von dem Steg axial nach außen erstreckt und den äußeren Laufring des Lagers umgibt; und eine Abdeckung (140), die über eine axiale auswärtige Öffnung des Hauptgehäuses hinweg montiert ist, und wobei das Hauptgehäuse optional Folgendes umfasst:
einen Montageflansch (92), der sich von der Seitenwand radial nach außen erstreckt und mit der Seitenwand und dem Steg einteilig gebildet ist,
und wobei die Abdeckung vorzugsweise Folgendes umfasst:
einen Körper (300), der an dem Hauptgehäuse montiert ist und Folgendes aufweist:
eine zentrale Öffnung an der Welle vorbei; und
eine Umfangsanordnung von Öffnungen (320) radial auswärts der zentralen Öffnung; und
ein durchsichtiges Fenster (330), das über die Umfangsanordnung der Öffnungen hinweg montiert ist.

12. Aufzugssystem einschließlich der Aufzugsmaschine nach einem der vorhergehenden Ansprüche und ferner Folgendes umfassend:
eine Aufzugskabine (22); und
ein Seil oder einen Riemen (26), das/der die Kabine an die Aufzugsmaschine hängt.

13. Verfahren zur Verwendung einer Aufzugsmaschine nach einem der Ansprüche 1 bis 11, wobei das Verfahren Folgendes umfasst:
Laufenlassen des Motors (60), um die Drehung der Seilscheibe (36) und des Lagergehäuses (84) anzutreiben;
die Drehung des Lagergehäuses und/oder Rollen der Lager (110, 112), wodurch zentrifugal Öl in dem Lagergehäuse verteilt wird; **gekennzeichnet durch**:
Auffangen von fallendem Öl in dem radial nach außen offenen Kanal (220, 222, 224, 226) und dann Ermöglichen eines Flusses des Öls in Umfangsrichtung in den Kanal.

14. Verfahren nach Anspruch 13, ferner umfassend:
das in Umfangsrichtung in den Kanal fließende Öl erreicht irgendwann eine Akkumulierung (532) in einem unteren Abschnitt eines Inneren des Lagergehäuses.

## Revendications

1. Machine d'ascenseur (34) comprenant :
un moteur (60) ;
une poulie (36) ;
un système de roulement supportant la poulie en rotation autour d'un axe (500) et comprenant :
un manchon intérieur (82) ;
une bague intérieure (102) montée sur le manchon intérieur ;
un boîtier (84) ;
une bague extérieure (104) montée sur le boîtier ;
un ou plusieurs réseaux circonférentiels d'éléments roulants (110, 112) entre la bague intérieure et la bague extérieure ; **caractérisée par** le système de roulement comprenant en outre
un écran (160 ; 161) comprenant :
un moyeu (166) fixé au manchon ; et
un canal ouvert radialement vers l'extérieur (220, 222) au moins le long d'une partie de l'écran.

2. Machine d'ascenseur selon la revendication 1, dans laquelle le canal ouvert radialement vers l'extérieur est l'un d'une pluralité de canaux radialement interdigités parmi :
un ou plusieurs canaux ouverts radialement vers l'extérieur (220, 222) de l'écran ; et
un ou plusieurs canaux ouverts radialement vers l'extérieur (224, 226) du boîtier.

3. Machine d'ascenseur selon une quelconque revendication précédente, dans laquelle l'un ou les deux parmi :
les un ou plusieurs canaux ouverts radialement vers l'extérieur de l'écran sont au moins deux canaux ; et
les un ou plusieurs canaux ouverts radialement vers l'extérieur du boîtier sont au moins deux canaux.

4. Machine d'ascenseur selon une quelconque revendication précédente, dans laquelle l'écran a :
une bride extérieure (168) ; et
ledit canal ouvert radialement vers l'extérieur (220) ayant :
une surface de paroi latérale intérieure (232) formée par la bride ;
une surface de base (230) formée par une barrière annulaire ; et
une surface de paroi latérale extérieure (234) formée par une lèvre faisant saillie radialement vers l'extérieur (250).

5. Machine d'ascenseur selon une quelconque revendication précédente, dans laquelle le canal ouvert radialement vers l'extérieur (220) est un premier canal ouvert radialement vers l'extérieur et le boîtier a :
un deuxième canal ouvert radialement vers l'extérieur (224), radialement à l'intérieur du premier canal ouvert radialement vers l'extérieur,
et éventuellement dans lequel l'écran a :
un troisième canal ouvert radialement vers l'extérieur (222), radialement à l'intérieur du deuxième canal ouvert radialement vers l'extérieur.

6. Machine d'ascenseur selon la revendication 5, dans laquelle le boîtier a :
un quatrième canal ouvert radialement vers l'extérieur (246), radialement à l'intérieur du troisième canal ouvert radialement vers l'extérieur de sorte qu'un chemin de fuite potentiel (552) passe séquentiellement :
radialement vers l'intérieur entre la bride extérieure d'écran et le boîtier ;
axialement vers l'extérieur au-delà d'un bord extérieur du premier canal ouvert radialement vers l'extérieur ;
radialement vers l'intérieur ;
axialement vers l'intérieur au-delà d'un bord intérieur du deuxième canal ouvert radialement vers l'extérieur ;
radialement vers l'intérieur ;
axialement vers l'extérieur au-delà d'un bord extérieur du troisième canal ouvert radialement vers l'extérieur ;
radialement vers l'intérieur ; et
axialement vers l'intérieur au-delà d'un bord intérieur du quatrième canal ouvert radialement vers l'extérieur.

7. Machine d'ascenseur selon une quelconque revendication précédente, dans laquelle le canal ouvert radialement vers l'extérieur (220) est un premier canal ouvert radialement vers l'extérieur et l'écran a :
un deuxième canal ouvert radialement vers l'extérieur (222), radialement à l'intérieur du premier canal ouvert radialement vers l'extérieur.

8. Machine d'ascenseur selon une quelconque revendication précédente, dans laquelle :
un chemin de fuite potentiel (552) passe séquentiellement :
axialement vers l'extérieur au-delà d'un bord extérieur du premier canal ouvert radialement vers l'extérieur ;
radialement vers l'intérieur ; et
au-delà d'un joint (260),
et dans lequel de préférence
le joint (260) est un joint labyrinthe ou un joint à lèvre.

9. Machine d'ascenseur selon une quelconque revendication précédente, dans laquelle :
le moteur a un stator intérieur fixe (64) et un rotor extérieur (62) ; et
la poulie est montée sur le rotor extérieur ;
et/ou dans lequel :
le manchon intérieur est fixé à l'arbre contre une rotation relative autour de l'axe ; et
le boîtier est monté sur la poulie pour supporter la poulie et
tourner avec celle-ci autour de l'axe en tant qu'unité ;
et/ou dans lequel :
le boîtier est monté sur la poulie par l'intermédiaire d'un moyeu de disque de frein.

10. Machine d'ascenseur selon une quelconque revendication précédente, dans laquelle le système de roulement est un premier système de roulement et la machine d'ascenseur comprend en outre :
un second système de roulement supportant la poulie en rotation autour de l'axe (500) et comprenant :
un manchon intérieur ;
une bague intérieure montée sur le manchon intérieur un boîtier ;
une bague extérieure montée sur le boîtier ;
un ou plusieurs réseaux circonférentiels d'éléments roulants entre la bague intérieure et la bague extérieure ; et
un écran comprenant :
un moyeu solidaire du manchon ; et
un canal ouvert radialement vers l'extérieur au moins le long d'une partie de l'écran.

11. Machine d'ascenseur selon une quelconque revendication précédente, dans laquelle le boîtier comprend :
un boîtier principal (108) ayant :
une bande (130) s'étendant radialement vers l'extérieur depuis une extrémité intérieure adjacente du manchon ; et
une paroi latérale (106) s'étendant axialement vers l'extérieur à partir de la bande et entourant la bague extérieure de roulement ; et
un couvercle (140) monté à travers une ouverture axialement extérieure du boîtier principal,
et dans lequel éventuellement le boîtier principal comprend :
une bride de montage (92) s'étendant radialement vers l'extérieur à partir de la paroi latérale et formée de manière unitaire avec la paroi latérale et la bande,
et dans lequel le couvercle comprend de préférence :
un corps (300) monté sur le boîtier principal et ayant :
une ouverture centrale passant par l'arbre ; et
un réseau circonférentiel d'ouvertures (320) radialement à l'extérieur de l'ouverture centrale ; et
une fenêtre transparente (330) montée à travers le réseau circonférentiel d'ouvertures.

12. Système d'ascenseur comportant la machine d'ascenseur selon une quelconque revendication précédente et comprenant en outre :
une cabine d'ascenseur (22) ; et
une corde ou courroie (26) suspendant la cabine de la machine d'ascenseur.

13. Procédé d'utilisation d'une machine d'ascenseur selon l'une quelconque des revendications 1 à 11, le procédé comprenant :
le fonctionnement du moteur (60) pour entraîner la rotation de la poulie (36) et du boîtier de roulement (84) ;
la rotation du boîtier de roulement et/ou le roulement de roulements (110, 112) distribuant de l'huile par centrifugation à l'intérieur du boîtier de roulement ; **caractérisé par**
la capture de l'huile qui tombe dans le canal ouvert radialement vers l'extérieur (220, 222, 224, 226) et ensuite le fait de permettre l'écoulement de l'huile circonférentiellement dans le canal.

14. Procédé selon la revendication 13 comprenant en outre :
l'huile s'écoulant circonférentiellement dans le canal atteignant finalement une accumulation (532) dans une partie inférieure d'un intérieur du boîtier de roulement.
